# EUROPEAN PATENT APPLICATION

(11) **EP 3 001 754 A1**
(43) Date of publication of application: **30.03.2016**
(21) Application number: 14306462.4
(22) Date of filing: 23.09.2014
(51) Int. Cl.: H04W 72/12, H04W 76/02

(54) **Wireless communication network control node and method**

(71) Applicant: ALCATEL LUCENT, 92100 Boulogne-Billancourt (FR)
(72) Inventor: Lim, Seau Sian, Swindon, Wiltshire SN5 7DJ (GB); Worrall, Chandrika, Swindon, Wiltshire SN5 7DJ (GB)
(74) Representative: Berthier, Karine

(57) **Abstract**

Aspects and embodiments provide a wireless communication network control node method, a wireless communication network control node and computer program product operable to perform that method. The network control node method comprises: receiving a request from user equipment in a wireless communication network to make a device to device transmission within the wireless communication network; determining a priority level associated with the requesting user equipment; and scheduling device to device communication resource to the requesting user equipment in dependence upon the determined priority level. Aspects and embodiments described recognise that it is possible to provide methods to allow D2D networks to perform priority handling amongst user equipment within the same D2D group and/or within different D2D groups.

## Description

### FIELD OF THE INVENTION

The invention relates to a wireless communication network control node method, a wireless communication network control node and computer program product operable to perform that method.

### BACKGROUND

Wireless telecommunication systems are known. In such systems network connectable devices or mobile communication devices such as user equipment, mobile telephones and similar are typically operable to communicate with base stations provided by network providers.

In known wireless telecommunication systems, radio coverage is provided to network connectable devices within areas known as cells. Abase station is located in each cell to provide radio coverage. Typically, network connectable devices in each cell are operable to receive information and data from a base station and to transmit information and data to a base station. Network connectable devices roam through a wireless communication system. A number of base stations are provided and are distributed geographically in order to provide a wide area of coverage to network connectable devices.

When user equipment is within an area served by a base station, communications may be established between the user equipment and the base station over associated radio links. Each base station typically supports a number of sectors within a geographical area of service. Typically, a different antenna within a base station supports each associated sector and each base station often has multiple antennas.

It has been recognised that it is possible to provide device-to-device communication. That is to say, it may be possible for network connectable devices to transmit and receive directly to each other without the need for a base station.

For device-to-device communication using wireless communication signals the channel (comprising time - frequency resource over which a signal is to be transmitted) should, where possible, be allocated to a device transmitting the signal to avoid signal collision. Device-to-device communications may be subject to various unexpected consequences. It is desired to address some of those consequences.

### SUMMARY

Accordingly, a first aspect provides a network control node method comprising: receiving a request from user equipment in a wireless communication network to make a device-to-device transmission within the wireless communication network; determining a priority level associated with the requesting user equipment; and scheduling device to device communication resource to the requesting user equipment in dependence upon the determined priority level.

The first aspect recognises that device-to-device networks may be subject to various issues. Device-to-device (D2D) communication may require methods to be employed within a network to discover D2D candidates and to establish D2D communications. Device-to-device communications may be particularly applicable to public safety and non-public safety scenarios.

### Device-to-Device Communication Transmission Methods

The first aspect recognises that two types of resource allocation schemes may be used in support of device-to-device communication regimes. One resource allocation scheme is known as a Mode 1 resource allocation scheme. Typically, Mode 1 is used when a transmitting network connectable device (for example, user equipment) is in a region of radio coverage supported by a base station. That mode of resource allocation requires a transmitting device to request radio resource from a network, or controlling network node, for each transmission or series of transmissions it intends to make.

Mode 2 resource allocation schemes are typically used when a transmitting user equipment is either within a coverage region supported by a base station, or completely outside network coverage supported by radio base stations. Mode 2 operates such that a transmitting user equipment is operable to autonomously select resource from a pool of radio resource in relation to each transmission it makes. The pool of radio resource may be preconfigured or provided by a network. The second mode of operation is more "contentious" since it will be understood that one device may potentially be operable to select the same radio resource for transmission at the same time as another device.

### Device-to-device Communication Reception

Regardless of the allocation scheme implemented within a network, a device partaking in device-to-device communication techniques must be operable to receive transmissions made by other devices in a D2D arrangement. As a result, user equipment or a D2D capable device is typically operable to monitor for any and all possible D2D transmissions. User equipment operating in D2D is typically provided with a pool of radio resources across which to listen. That pool may be preconfigured (to be used when the user equipment is out of a base station coverage region) or can be provided by a network or control node (for example, when a device is within a coverage region or within a partial coverage region).

The first aspect recognises that device-to-device communication mechanisms differ from those in a traditional communications network, in that resource available with a network may be used to enable one to many communications and that the resource allocated to such device-to-device communication methods is typically within the same frequency spectrum, both when transmitting and receiving, thus requiring a degree of half duplexing to allow successful communication between devices.

The first aspect recognises that it is possible to implement priority schemes within device-to-device communications. In particular, embodiments of the first aspect may provide priority scheduling and communication handling to various user equipment within a D2D network. Different user equipment belonging to a D2D group may be allocated different priorities and, similarly, user equipment across various groups may be allocated different priorities. Since the D2D radio interface is a half duplex operation arrangement (that is to say, only one user equipment can be transmitting at any one time), there is a need to ensure that it is the highest priority user equipment or the highest priority communication which is allocated transmission rather than any other user equipment within a group or across various groups. The first aspect recognises that it is possible to implement priority handling for D2D transmissions. It will be appreciated that D2D devices operating in Mode 1 may be particularly suited to implementation of a method in accordance with the first aspect, but that if a suitable control node is provided in a D2D network operating in a Mode 2 resource allocation scheme, aspects and embodiments described herein may be applied successfully.

The network control node method may comprise a network access node method. The method may comprise: receiving a request from user equipment in a wireless communication network to make a device to device transmission within said wireless communication network. That device to device transmission (D2D transmission) may comprise communication from a first user equipment to one or more other user equipment in the wireless communication network, that communication being transmitted by a first user equipment and directly received by one or more second user equipment. In other words, each of the user equipment operates as a radio frequency transceiver and the device to device communication can occur without routing data and signals through a network access node. It will be appreciated that, in order for user equipment to operate in D2D mode, they are likely to be in relatively close proximity to each other, since the transmit/receive power of user equipment is limited.

The method may comprise: determining a priority level associated with the requesting user equipment. Accordingly, by associating a relative importance to a user and their transmissions within D2D operation, a scheduling node maybe able to make intelligent decisions. In particular, the control node may be able to schedule device to device communication resource to requesting user equipment in dependence upon the determined priority level. Since the D2D radio interface is a half duplex operation arrangement (that is to say, only one user equipment can be transmitting at any one time), there is a need to ensure that it is the highest priority user equipment or the highest priority communication which is allocated transmission rather than any other user equipment within a group or across various groups.

According to one embodiment, receiving a request from user equipment comprises: receiving a request to make a one to many device to device transmission within a device to device group. According to one embodiment, receiving a request from user equipment comprises: receiving a request to make a one to many device to device transmission across at least two device to device groups. Accordingly, the first aspect may operate to make a scheduling priority decision based on prioritisation between users within a group or users across several groups.

In one embodiment, the method comprises: scheduling device to device communication resource to between at least two requesting user equipment to the requesting user equipment which is determined to have the highest priority. Accordingly, a network control node , such as an eNodeB, may typically be operable to provide or allocate radio frequency resource to user equipment for every D2D transmission or for a series of D2D transmissions. The network control node operates as a D2D resource controller and is typically the node which decides, between user equipment, which user equipment to which to allocate resource. That is to say, the control node operates to schedule resource to D2D devices. According to described methods, the control node may be operable to determine the relative priorities of user equipment operating in D2D mode. The control node may therefore be operable to determine the relative priority between user equipment within the same group or within user equipment operating across different groups, each requesting D2D resource on which to make a transmission or series of transmissions.

In one embodiment, the priority level comprises: a priority level associated with a device to device group of which the requesting user equipment is a member. In one embodiment, the priority level comprises: a priority level associated with the user equipment across at least two device to device groups of which the requesting user equipment is a member. Accordingly, priority information may itself comprise various indications of priority. In particular, the user equipment priority handling information may comprise a level which is applied for all user equipment within a D2D group. In such a case, the user equipment priority information may contain a D2D group identifier (destination L2 ID) and an associated user equipment priority to be applied in respect of that group. In some arrangements, the user equipment priority handling may be applied across groups. Accordingly, user equipment priority information may then contain a list of group identifiers and the associated user equipment priority for that list of groups. It will be appreciated that user equipment may have more than one priority for different lists of groups and that user equipment priority information encompasses all of those priority indications.

In one embodiment, determining the priority level associated with the requesting user equipment comprises: receiving user equipment priority level information from the core network. In one embodiment, receiving user equipment priority level information from the core network comprises: receiving user equipment context information containing the priority level information from the core network. Accordingly, user equipment priority information can be provided to a network control node prior to any specific request from that user equipment within a network to make a D2D transmission. In particular, the control node may be informed, via user equipment context exchange received from the core network, of user equipment context information, including priority information. An appropriate node in the core network, for example, an MME, may be operable to provide the control node with the relevant information. The user equipment priority information may, for example, be stored in the ProSE function or a Home Location Register (HLR) from where an MME may retrieve the information.

In one embodiment, determining the priority level associated with the requesting user equipment comprises: receiving user equipment priority level information from the user equipment. In one embodiment, receiving user equipment priority level information from the user equipment comprises: receiving user equipment assistance information containing the priority level information. Accordingly, user equipment priority information can be provided to the control node prior to, or during, a request for D2D transmission resource by user equipment. Since user equipment typically needs to establish an RRC connection before requesting D2D transmission resource it is possible to implement an arrangement in which the user equipment itself provides the control node with the relevant user equipment priority information. Such an arrangement recognises that the user equipment typically operates to establish an RRC connection before requesting D2D transmit resource. The user equipment may operate to indicate to the control node that it is interested in D2D operation. That indication may occur within dedicated RRC signalling; for example, with a user equipment assistance information message or a new RRC message. Some arrangements recognise that user equipment assistance information or a similar new RRC message can be configured such that it includes user equipment priority information which can then be used by a control node.

In one embodiment, the user equipment priority level information comprises: a substantially static priority level for use by the user equipment in relation to more than one device to device transmission.

In one embodiment, receiving user equipment priority level information from the user equipment comprises: receiving Layer 2 messaging containing the priority level information. Accordingly, rather than preconfiguring a network control node (for example, an eNodeB) with static priority information relating to user equipment, whether from the core network or received from the user equipment, it is possible to provide appropriate user equipment priority information to a control node during a request from user equipment to make such D2D a transmission.

In one embodiment, the Layer 2 messaging comprises: priority information encoded by the requesting user equipment in a D2D or ProSE Buffer Status Report. According to such arrangements, if user equipment is operable to provide priority information to a control node via layer 2 signalling then, in some arrangements, user equipment priority can be provided in, for example, the ProSE BSR. That priority information may be encoded within, for example, the sub-header of the ProSE BSR. If the LCID of the ProSE BSR is used for transmission of priority information and that priority information can be encoded in four priority levels, then, for example, the first two bits of the sub-header can be used to encode user equipment priority information. If, however, more priority levels are required, an octet can be used in a D2D BSR. Of course, some arrangements may allow for a new MAC control element to be used to provide user equipment priority information to a network control node.

In one embodiment, the user equipment priority level information comprises a dynamic priority level generated by said requesting user equipment for use by the user equipment in relation to a requested device to device transmission.

A second aspect provides a computer program product operable, when executed on a computer, to perform the method of the first aspect.

A third aspect provides a network control node comprising: reception logic operable to receiving a request from user equipment in a wireless communication network to make a device to device transmission within the wireless communication network; determination logic operable to determine a priority level associated with the requesting user equipment; and scheduling logic operable to schedule device to device communication resource to the requesting user equipment in dependence upon the determined priority level.

In one embodiment, the scheduling logic is operable to scheduling device to device communication resource to between at least two requesting user equipment to the requesting user equipment which is determined to have the highest priority.

In one embodiment, the priority level comprises: a priority level associated with a device to device group of which the requesting user equipment is a member.

In one embodiment, the priority level comprises: a priority level associated with the user equipment across at least two device to device groups of which the requesting user equipment is a member.

In one embodiment, the determination logic is operable to determine the priority level associated with the requesting user equipment by receiving user equipment priority level information from the core network.

In one embodiment, receiving user equipment priority level information from the core network comprises: receiving user equipment context information containing the priority level information from the core network.

In one embodiment, , the determination logic is operable to determine the priority level associated with the requesting user equipment by receiving user equipment priority level information from the user equipment.

In one embodiment, receiving user equipment priority level information from the user equipment comprises: receiving user equipment assistance information containing the priority level information.

In one embodiment, the user equipment priority level information comprises: a substantially static priority level for use by the user equipment in relation to more than one device to device transmission.

In one embodiment, receiving user equipment priority level information from the user equipment comprises: receiving Layer 2 messaging containing the priority level information.

In one embodiment, the Layer 2 messaging comprises: priority information encoded by the requesting user equipment in a D2D or ProSE Buffer Status Report

In one embodiment, the user equipment priority level information comprises a dynamic priority level generated by said requesting user equipment for use by the user equipment in relation to a requested device to device transmission.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 is a signalling diagram illustrating schematically a method according to one arrangement;
Figure 2 is a signalling diagram illustrating a method according to a second arrangement; and
Figure 3 is a signalling diagram illustrating schematically a method according to a third arrangement.

### DESCRIPTION OF THE EMBODIMENTS

Before discussing the embodiments in any more detail, first an overview will be provided.

Arrangements recognise that typical operation of a Mode 1 resource allocation transmission scheme is such that user equipment wishing to make a D2D transmission requests transmission resource from an eNodeB or other suitable control node. That eNodeB is operable to provide the user equipment with D2D resources for every transmission or for a series of transmissions. In particular, the eNodeB operates as a D2D resource controller and is typically the node which decides, between user equipment, which user equipment to allocate resource. That is to say, the eNodeB operates to schedule resource to D2D devices. The control node is operable to determine the relative priorities of user equipment operating in D2D mode. The control node may therefore be operable to determine the relative priority between user equipment within the same group or within user equipment operating across different groups.

Methods and apparatus described can allow for user equipment priority to be provided to a control node to assist in the scheduling of D2D transmissions in accordance with priorities set within a group or across groups of a network. In some arrangements and methods, user equipment priority may be substantially static or semi-static and provided to a control node prior to any request for transmission by user equipment to make a D2D transmission. In some arrangements, as part of requesting D2D transmission or during a request to transmit using D2D techniques, priority information may be provided to the control node. Such priority information can be provided in relation to D2D communications comprising either: a direct one to M group transmission or direct 1 one to broadcast transmissions. The control node (for example, the eNodeB) may operate to base transmission resource allocation for a D2D group (or across D2D groups) upon user equipment priority information provided in relation to a user equipment requesting D2D transmission resources.

Various possible methods and arrangements will be described in more detail with reference to the drawings.

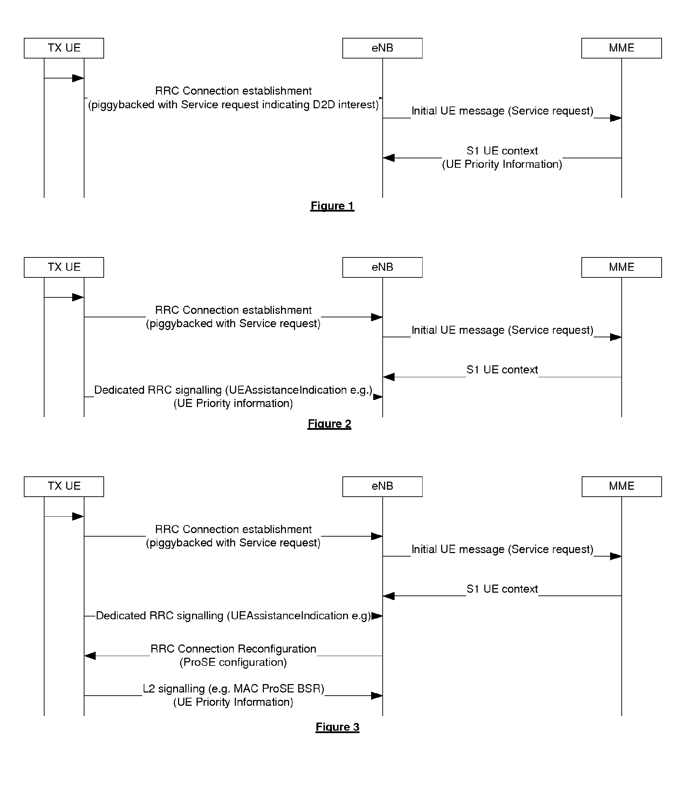

Figure 1 illustrates schematically a signalling diagram showing a method according to one arrangement. According to the arrangement shown generally in Figure 1, user equipment priority information can be provided to an eNodeB prior to any specific request from that user equipment within a network to make a D2D transmission. In particular, the arrangement shown in Figure 1 is such that an eNodeB is informed, via user equipment context exchange received from the core network, of user equipment context information. For example, in a Mode 1 resource allocation scheme, user equipment will typically establish an RRC connection with a network before any D2D communications are made. User equipment and eNodeB may be operable to perform non access stratum (NAS) signalling of a service request. NAS signalling typically occurs, in an LTE radio access technology network, between user equipment and an MME. User equipment context initiation procedures can be invoked for every service request from user equipment and the control node, for example eNodeB, can be provided with that user equipment priority information when the user equipment context information is provided to the eNodeB by the core network.

As shown in Figure 1, one possible flow for a method according to this arrangement may be that:
A user equipment may establish that it has an interest in performing D2D operation. User equipment non access stratum signalling maybe used to indicate to a user equipment access stratum that there is a need to establish RRC connection with a network. Accordingly, the user equipment access stratum (AS) may be operable to establish RRC connection and a non-access stratum (NAS) service request maybe provided to a Mobility Management Entity within the network.

If the MME receives the NAS service request it can operate to provide user equipment context information to an appropriate access stratum network control node. As shown in Figure 1, that network control node may comprise an eNodeB. The user equipment context information provided by the MME to the eNodeB can be enhanced such that it includes user equipment priority information for use if that user equipment performs D2D operation. The user equipment priority information can be stored in the ProSE function or a Home Location Register (HLR) where the MME can retrieve the information. The eNodeB may then operate to use the information provided by the core network (MME) when deciding how to allocate transmission resources to the D2D user equipment requesting D2D resource.

A second possible arrangement recognises that user equipment priority information can be provided to the eNodeB prior to request for transmission resource by user equipment. Since user equipment typically needs to establish an RRC connection before requesting D2D transmission resource it is possible to implement an arrangement in which the user equipment itself provides the eNodeB with the relevant user equipment priority information. Such an arrangement recognises that the user equipment typically operates to establish an RRC connection before requesting D2D transmit resource. In particular, in order for an eNodeB to configure nodes to operate according to D2D techniques either in Mode 1 or Mode 2 to the user equipment, that eNodeB must be informed that a particular user equipment is interested in performing D2D operation, be it reception or transmission. During the necessary reconfiguration process required to enable D2D communication between the nodes of interest some arrangements may allow for the user equipment to provide the eNodeB with relevant user equipment priority information.

Figure 2 is a signalling diagram illustrating schematically one possible method according to a second arrangement. As shown schematically in Figure 2, once user equipment has recognised that it is interested in performing D2D operation, user equipment NAS indicates to the user equipment AS a need to establish an RRC connection with the network. The user equipment may operate to indicate to the eNodeB that it is interested in D2D operation. That indication may occur within dedicated RRC signalling; for example, with a user equipment assistance information message or a new RRC message. The second arrangement recognises that such user equipment assistance information or similar new RRC message can be configured such that it includes user equipment priority information which can then be used by an eNodeB.

A third method recognises that rather than preconfiguring a network control node (for example, an eNodeB) with static priority information relating to user equipment, whether from the core network or received from the user equipment, it is possible to provide appropriate user equipment priority information to an eNodeB during a request from user equipment to make such a D2D transmission. According to such a method, a user equipment may operate such that during the request a D2D/ ProSE Buffer Status Report (BSR) can be sent to the control node or eNodeB. In particular, some arrangements recognise that user equipment priority information can be provided to an eNodeB as part of an appropriate D2D-associated Buffer Status Report (BSR).

Figure 3 is a signalling diagram illustrating schematically a method according to a third arrangement. As shown in Figure 3, rather than user equipment providing priority information as part of RRC signalling (as in the method shown schematically in Figure 2), the user equipment maybe operable to provide the eNodeB with priority information within layer 2 signalling; for example, MAC signalling or D2D/ProSE BSR signalling.

According to such arrangements, if user equipment is operable to provide priority information to a control node via layer 2 signalling then, in some arrangements, user equipment priority can be provided in, for example, the ProSE BSR. That priority information may be encoded within, for example, the sub-header of the ProSE BSR. If the LCID of the ProSE BSR is used for transmission of priority information and that priority information can be encoded in four priority levels, then, for example, the first two bits of the sub-header can be used to encode user equipment priority information. If, however, more priority levels are required, an octet can be used in a D2D BSR. Of course, some arrangements may allow for a new MAC control element to be used to provide user equipment priority information to an eNodeB.

It will be appreciated that whatever mechanism is used to provide an eNodeB with user equipment priority information, that priority information may itself comprise various indications of priority. In particular, the user equipment priority handling information may comprise a level which is applied for all user equipment within a group. In such a case, the user equipment priority information may contain a D2D group identifier (destination L2 ID) and an associated user equipment priority to be applied in respect of that group. In some arrangements the user equipment priority handling may be applied across groups. Accordingly, user equipment priority information may then contain a list of group identifiers and the associated user equipment priority for that list of groups. It will be appreciated that user equipment may have more than one priority for different lists of groups and that user equipment priority information encompasses all of those priority indications.

Aspects and embodiments described herein recognise that it is possible to provide methods to allow D2D networks to perform priority handling amongst user equipment within the same D2D group and/or within different D2D groups.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network control node method comprising:
receiving a request from user equipment in a wireless communication network to make a device to device transmission within said wireless communication network;
determining a priority level associated with said requesting user equipment; and
scheduling device to device communication resource to said requesting user equipment in dependence upon said determined priority level.

2. A method according to claim 1, wherein receiving a request from user equipment comprises: receiving a request to make a one to many device to device transmission within a device to device group or across at least two device to device groups.

3. A method according to claim 1 or claim 2, wherein said method comprises:
scheduling device to device communication resource to between at least two requesting user equipment to the requesting user equipment which is determined to have the highest priority.

4. A method according to any preceding claim, wherein said priority level comprises: a priority level associated with a device to device group of which said requesting user equipment is a member.

5. A method according to any preceding claim, wherein said priority level comprises: a priority level associated with said user equipment across at least two device to device groups of which said requesting user equipment is a member.

6. A method according to any preceding claim, wherein determining said priority level associated with said requesting user equipment comprises:
receiving user equipment priority level information from the core network.

7. A method according to claim 6, wherein receiving user equipment priority level information from the core network comprises: receiving user equipment context information containing said priority level information from the core network.

8. A method according to any one of claims 1 to 5, wherein determining said priority level associated with said requesting user equipment comprises:
receiving user equipment priority level information from said user equipment.

9. A method according to claim 8, wherein receiving user equipment priority level information from said user equipment comprises: receiving user equipment assistance information containing said priority level information.

10. A method according to any preceding claim, wherein said user equipment priority level information comprises a substantially static priority level for use by said user equipment in relation to more than one device to device transmission.

11. A method according to any one of claims 1 to 5, wherein receiving user equipment priority level information from said user equipment comprises: receiving Layer 2 messaging containing said priority level information.

12. A method according to claim 11, wherein said Layer 2 messaging comprises:
priority information encoded by said requesting user equipment in a D2D or ProSE Buffer Status Report

13. A method according to claim 11 or claim 12, wherein said user equipment priority level information comprises a dynamic priority level generated by said requesting user equipment for use by said user equipment in relation to a requested device to device transmission.

14. A computer program product operable, when executed on a computer, to perform the method of any one of claims 1 to 13.

15. A network control node comprising:
reception logic operable to receiving a request from user equipment in a wireless communication network to make a device to device transmission within said wireless communication network;
determination logic operable to determine a priority level associated with said requesting user equipment; and
scheduling logic operable to schedule device to device communication resource to said requesting user equipment in dependence upon said determined priority level.
